# EUROPÄISCHE PATENTSCHRIFT

(11) **EP 3 011 644 B1**
(45) Veröffentlichungstag und Bekanntmachung des Hinweises auf die Patenterteilung: **27.01.2021**
(21) Anmeldenummer: 14739055.3
(22) Anmeldetag: 13.06.2014
(51) Int. Cl.: H01R 13/627, H01R 13/633

(54) **STECKERELEMENT**
CONNECTOR ELEMENT
ÉLÉMENT CONNECTEUR

(30) Priorität: 21.06.2013 DE 102013211865
(43) Veröffentlichungstag der Anmeldung: 27.04.2016
(73) Patentinhaber: LEONI Kabel GmbH, 91154 Roth (DE)
(72) Erfinder: FRAHMANN, Arno, 26188 Kleefeld (DE)
(74) Vertreter: FDST Patentanwälte
(86) Internationale Anmeldenummer: PCT/EP2014/062468
(87) Internationale Veröffentlichungsnummer: WO 2014/202489

(56) Entgegenhaltungen:
- CN-U- 202 997 192
- DE-A1-102009 059 685
- US-A1- 2011 267 742
- US-A1- 2013 115 794
- US-B1- 7 476 117
- US-B1- 7 540 755

## Beschreibung

Die Erfindung betrifft ein Steckerelement, insbesondere ein sogenanntes SFP-Steckerelement, mit den Merkmalen des Oberbegriffs des Anspruchs 1. Ein derartiges Steckerelement ist beispielsweise aus der WO 2013/030093 A1 zu entnehmen.

Bei dem Steckerelement handelt es sich um einen sogenannten Flachstecker mit einem Verriegelungsmechanismus, wie er insbesondere in Computernetzwerken als elektrischer oder optischer Stecker eingesetzt wird. Derartige Steckerelemente sind auch unter den Begriffen "SFP" (small form factor pluggable) oder auch "QSFP" (quad small form factor pluggable) bekannt und in entsprechenden Normen im Hinblick auf ihre geometrischen Abmessungen bestimmt. Aus der genannten WO 2013/030093 A1 ist sowohl ein QSFP-Stecker als auch ein SFP-Steckerelement (auch als CXP-Steckerelement bezeichnet) zu entnehmen. Die vorliegen

Der QSFP-Stecker zeichnet sich grundsätzlich durch einen Entriegelungsmechanismus aus, welcher in den Seitenwänden des Gehäuses integriert ist. Hierzu ist ein in etwa bügelförmiges Verriegelungselement angeordnet, welches im hinteren, rückwärtigen Bereich des Steckergehäuses innenliegend zwischen zwei Gehäusehälften geführt ist. Das Verriegelungselement weist demnach zwei sich in Längsrichtung in den Seitenwänden erstreckende Verriegelungsarme auf, an denen endseitig jeweils ein Riegelelement angeordnet ist, welches seitlich über den Verriegelungsarm übersteht.

Im Unterschied zu derartigen QSFP-Steckertypen ist das Riegelelement bei den SFP-Steckertypen an einer Oberseite des Steckergehäuses ausgebildet. Bei dem SFP-Stecker gemäß der WO 2013/030093 A1 ist das Verriegelungselement insgesamt nach Art einer Wippe ausgebildet, an der im vorderen Ende das Riegelelement angeformt ist.

Zur Betätigung des Verriegelungsmechanismus ist regelmäßig ein Betätigungselement angeordnet, welches manuell durch Ziehen oder Drehen das Verriegelungselement von einer verriegelten in eine entriegelte Position überführt.

Bei der WO 2013/030093 A1 ist das Betätigungselement als eine Ziehlasche ausgebildet, die in Längsrichtung des Steckerelements zum Entriegeln gezogen wird. Das Verriegelungselement ist nach Art einer Wippe ausgebildet, welche einen vorderen, das Riegelelement aufweisenden Wippenarm sowie einen hinteren Wippenarm aufweist, welcher mit einem Quersteg der Ziehlasche zusammenwirkt. Im Bereich des Riegelelements ist hierbei eine Schraubenfeder zur Ausübung der Rückstellkraft als loses Bauteil angeordnet. Ergänzend ist durch das Verriegelungselement als Lagerachse ein spiralförmiger Federstift geführt, welcher eine zusätzliche Rückstellkraft bei einer Drehbewegung ausübt.

Aus der US 7 540 755 B1 ist ein Steckerelement zu entnehmen, bei dem der Verriegelungsmechanismus außerhalb des Steckergehäuses angeordnet ist, wobei der Verriegelungsmechanismus von einem mit einem oberen Gehäuseteil verschraubten Deckel überdeckt ist. Der Verriegelungsmechanismus weist dabei ein drehbares Verriegelungselement auf, welches mit Hilfe eins Federelements des Deckels in eine Grundstellung (Verriegelungsstellung) in Richtung zum oberen Gehäuseteil gedrückt wird.

Aus der US 2013/0115794 A1 ist ein Steckerelement zu entnehmen, bei dem ebenfalls der Verriegelungsmechanismus außerhalb des Steckergehäuses angeordnet und von einem mit dem oberen Gehäuseteil verschraubten Deckel überdeckt ist. Über das Steckergehäuse ist ein Schirmkäfig geschoben, welcher ein Federelement aufweist, welches gegen ein drehbares Verriegelungselement von unten drückt.

Aus der US 2011/0267742 A1 ist ein weiteres Steckerelement zu entnehmen, bei dem der Verriegelungsmechanismus ebenfalls außerhalb des Steckergehäuses angeordnet ist. Ein drehbares Verriegelungselement liegt zwischen einem Gehäuseteil und einem Betätigungselement ein. Ein Federelement ist zwischen dem Verriegelungselement und dem Betätigungselement angeordnet und drückt das Verriegelungselement in eine Grundstellung. Das Federelement ist dabei mit einem Arm um eine Querstrebe gewickelt.

Wie bereits erwähnt dienen derartige Stecker zum Anschluss insbesondere von Datenkabeln in Computer-Netzwerken an Geräte oder auch Verteiler. Der Einbauraum ist hierbei oftmals begrenzt und die einzelnen Stecker sind sehr dicht nebeneinander angeordnet. Innenliegend weisen die Stecker eine geeignete Elektronik auf, die üblicherweise auf einer Leiterplatte integriert ist. Die Leiterplatte mit entsprechenden Kontakten bildet zugleich auch eine Kontaktzunge, die stirnseitig am vorderen Ende des Steckergehäuses frei zugänglich ist, und über die ein Steckkontakt mit der jeweiligen Komponente ausgebildet wird.

Die Stecker sind allgemein zum wiederholten End- und Verriegeln ausgebildet. Um nach einem Entriegeln wieder ein zuverlässiges Verriegeln zu gewährleisten wird auf das Verriegelungselement üblicherweise eine Rückstellkraft über Federelemente ausgeübt, um es wieder in die Ausgangsposition zu versetzten bzw. in dieser zuverlässig zu halten. Die Ausgangsposition entspricht dabei der Verriegelungsposition. Die Ausbildung und Montage der Federelemente ist mit Aufwand und Kosten verbunden.

Ausgehend hiervon liegt der Erfindung die Aufgabe zugrunde, bei einem derartigen Steckerelement, wie es insbesondere aus der WO 2013/030093 A1 bekannt ist, ein sicheres Rückstellen bzw. Halten des Verriegelungselementes in der Ausgangsposition bei geringem Aufwand zu gewährleisten.

Die Aufgabe wird erfindungsgemäß gelöst durch ein Steckerelement mit den Merkmalen des Anspruchs 1. Bei dem Steckerelement handelt es sich insbesondere um einen sogenannten SFP-Stecker. Das Verriegelungselement ist bei diesem SFP-Stecker drehbar im Steckergehäuse gelagert und weist ein Riegelelement auf, welches zum formschlüssigen Verriegeln des Steckerelements mit einem Gegenstück ausgebildet ist. Das Steckergehäuse ist ein zweischaliges Gehäuse mit zwei Gehäuseteilen, nämlich ein Oberteil sowie ein Unterteil, die einen Innenraum des Steckerghäuses begrenzen, wobei das Steckergehäuse sich in Längsrichtung zwischen einer rückseitigen Stirnwand zu einer vorderen Stirnseite erstreckt und die rückseitige Stirnwand eine Kabelöffnung für ein einzuführendes Kabel ausbildet und die vordere Stirnseite eine Öffnung für ein durch eine Leiterplatte gebildetes Steckkontaktelement aufweist. Zur Betätigung des Verriegelungselements ist ein insbesondere als Ziehlasche ausgebildetes Betätigungselement vorgesehen. Bei einem Ziehen der Ziehlasche in Stecker-Längsrichtung wirkt die Ziehlasche auf das Verriegelungselement, so dass dieses eine Drehbewegung ausübt und zwischen einer Verriegelungsposition und einer offenen Position wechselt. Um eine Rückstellkraft auf den Verriegelungsmechanismus auszuüben, um das Riegelelement nach einem Entriegeln wieder in die Verriegelungsposition zu bringen bzw. es zuverlässig in der verriegelten Position zu halten ist nunmehr ein Federblech im Innenraum des Steckergehäuses angeordnet, welches sich an einem der Gehäuseteile zumindest mittelbar als Gegenlager abstützt. Das Federblech übt eine Federkraft auf das Verriegelungselement entgegen der vom Betätigungselement, also der Ziehlasche hervorgerufenen Kraft aus, um eine Rückstellkraft auf den Verriegelungsmechanismus auszuüben, um das Riegelelement nach einem Entriegeln wieder in die Verriegelungsposition zu bringen bzw. es zuverlässig in der verriegelten Position zu halten. Das Federblech ist dabei mit dem einen Gehäuseteil fest verbunden, beispielsweise durch Nieten oder Schrauben. Vorzugsweise ist das Federblech dabei das einzige auf den Verriegelungsmechanismus einwirkende Federelement, welches die erforderliche Rückstellkraft ausübt. Das Federblech ist also zwischen dem Verriegelungsmechanismus und dem Gehäuse zwischengelegt. Zweckdienlicherweise überdeckt es dabei den Verriegelungsmechanismus, also das Verriegelungselement und den Bereich des Zusammenwirkens zwischen Betätigungselement und Verriegelungselement, weitgehend vollflächig. Das Federblech ist daher insgesamt nach Art einer Überdeckung für den Verriegelungsmechanismus ausgebildet.

Durch diese Ausgestaltung ist zum Einen die Herstellung des Federblechs einfach und kostengünstig. Zudem ist auch die Montage vergleichsweise einfach, da das Federblech bei der Montage an dem einen Gehäuseteil befestigt werden kann und daher keine losen Teile vorliegen.

Zweckdienlicherweise umfasst dabei das Federblech eine erste Federlasche, welche eine erste Rückstellkraft entgegen der Drehbewegung des Verriegelungselements bei einem Ziehen an der Ziehlasche ausübt. Die erste Federlasche liegt am Verriegelungselement an und wird zusammen mit diesem bei einer Betätigung ausgelenkt. Die Auslenkung ist hierbei insbesondere in einer Vertikalrichtung. Die erste Federlasche steht dabei vorzugsweise an einer Randseite einer Grundplatte des Federblechs ab, wobei diese Grundplatte insbesondere zur Fixierung am Gehäuseteil ausgebildet ist.

Das Verriegelungselement ist zweckdienlicherweise nach Art einer Wippe ausgebildet und umfasst einen (Dreh-) Lagerbolzen sowie einen Wippenarm, an dem das Riegelelement ausgebildet ist. Die erste Federlasche ist nunmehr derart angeordnet, dass sie auf den Wippenarm einwirkt und zwar auf die dem Riegelelement gegenüberliegende Seite, so dass die Rückstelle in Richtung in die verriegelte Position wirkt.

Um eine sichere Führung der nur lose am Wippenarm anliegenden ersten Federlasche zu gewährleisten, ist in zweckdienlicher Ausgestaltung am Wippenarm insbesondere an dessen Ende eine Ausmuldung als Gegenlagerfläche für die erste Federlasche ausgebildet.

In bevorzugter Ausgestaltung weist das Federblech eine zweite Federlasche auf, welche eine zweite Rückstellkraft entgegen der Betätigungsrichtung des Betätigungselements, also insbesondere entgegen der Ziehrichtung der Ziehlasche ausübt. Insbesondere in Kombination mit der ersten Federlasche ist daher das Federblech insoweit doppelwirkend und weist zwei separat und unterschiedlich wirkende federnde Bereiche auf. Durch die Integration dieser zwei Federlaschen am Federblech ist ein besonders einfacher und kompakter Aufbau und entsprechend auch eine einfache Montage ermöglicht. Die zweite Federlasche übt dabei insbesondere eine Rückstellkraft in Längsrichtung aus. Die beiden Federlaschen üben daher in unterschiedliche Richtungen Rückstellkräfte aus. Insbesondere für die Ausübung der zweiten Rückstellkraft ist die Befestigung des Federblechs am Gehäuseteil von besonderer Bedeutung, um ein Verschieben des Federblechs zu verhindern. Ein besonderer Vorteil der Integration der zweiten Federlasche am Federblech ist darin zu sehen, dass das Federblech quasi selbst ein Widerlager für die zweite Federlasche bildet, so dass auf ein separates sich in Längsrichtung erstreckendes Federelement verzichtet werden kann.

Zweckdienlicherweise weist das Betätigungselement einen quer zur Längsrichtung orientierten Querbügel auf, welcher von der zweiten Federlasche zur Ausübung der zweiten Rückstellkraft hintergriffen wird. Über den Querbügel erfolgt üblicherweise mittel- oder unmittelbar die Kraftübertragung vom Betätigungselement auf das Verriegelungselement. Da dieser Querbügel von der zweiten Federlasche auf der dem Verriegelungselement abgewandten Seite hintergriffen wird, wird die Ziehlasche wieder in Richtung zur Ausgangsposition gedrückt, so dass das Verriegelungselement in seine Verriegelungsposition gedrückt wird. Dadurch erfährt also die erste Federlasche, die unmittelbar auf das Verriegelungselement wirkt, eine Unterstützung. Insgesamt ist dadurch eine zuverlässige und sichere Rückführung bzw. ein sicheres Halten des Verriegelungselements in der verriegelten Stellung gewährleistet. Um diesen Hintergriff des Querbügels zu ermöglichen, ist die zweite Federlasche dabei am rückwärtigen, zum Betätigungselement orientierten Ende als eine nach unten abgekröpfte Lasche ausgebildet.

Die zweite Federlasche weist dabei einen gebogenen, federnden Vertikalschenkel auf, der sich in Vertikalrichtung erstreckt, an den sich ein ebenfalls vorzugsweise gebogener, federnder Querschenkel anschließt, welcher auf das Betätigungselement, insbesondere den Querbügel zur Ausübung der zweiten Rückstellkraft einwirkt.

Insbesondere ist lediglich ein mittiger Vertikalschenkel ausgebildet, an den sich beidseitig jeweils ein Querschenkel anschließt. Dadurch wird eine federnde Unterstützung vorzugsweise über die gesamte oder nahezu gesamte Breite des Querbügels erreicht. Gleichzeitig bleiben die Randbereiche des Federblechs seitlich des Vertikalschenkels für weitere Funktionen frei.

Zweckdienlicherweise weist nämlich das Federblech an seinem zum Betätigungselement orientierten Ende weiterhin einen Anschlag für das Betätigungselement auf. Hierzu ist das Federblech endseitig insbesondere etwa L-förmig umgebogen. Zweckdienlicherweise sind hierbei seitlich des Vertikalschenkels zwei umgebogene Anschläge ausgebildet. Mit diesen Anschlägen wird die Bewegung des Betätigungselements, also insbesondere der Ziehlasche und insbesondere des Querbügels der Ziehlasche auf einen Maximalwert beschränkt. Dieser Anschlag ist dabei derart platziert, dass das Riegelelement sich in der entriegelten Stellung befindet. Dem Federblech ist daher eine weitere Funktion, nämlich eine Anschlagsfunktion zugewiesen.

Zweckdienlicherweise weist das Federblech zumindest eine, vorzugsweise zwei Lagerhalbschalen auf, in denen der Lagerbolzen des drehbar gelagerten Verriegelungselements drehbar gelagert ist. Das Lager für den Lagerbolzen wird dabei vorzugsweise durch ein Zusammenwirken der Lagerhalbschalen des Federblechs mit entsprechenden Lagerhalbschalen am Steckergehäuse ausgebildet. Dies erlaubt eine besonders einfache Montage, da das Verriegelungselement mit dem Lagerbolzen lediglich in Lagerhalbschalen eingelegt werden braucht und dadurch bereits in der Montageposition vorfixiert ist. Durch die Integration der Lagerhalbschalen in das Federblech ist zumindest das eine Gehäuseteil vereinfacht und an diesem brauchen keine Lagerhalbschalen ausgebildet zu werden.

Die beiden Lagerhalbschalen des Federblechs sind dabei an gegenüberliegenden Seiten durch Umbiegen einer seitlichen Lasche des Federblechs ausgebildet.

Zweckdienlicherweise umfasst das Verriegelungselement einen Queranschlag, der von einer Entriegelungslasche des Betätigungselements hintergriffen wird, um die Bewegung des Betätigungselements auf das Verriegelungselement zu übertragen. Diese Entriegelungslasche bildet insbesondere zusammen mit dem Querbügel einen Durchbruch oder eine Aufnahmetasche, in die der Queranschlag hineinreicht und lose einliegt. Bei einem Ziehen an der Ziehlasche wird daher über diese Entriegelungslasche der Queranschlag in Längsrichtung ausgelenkt, wobei aufgrund der Lagerung des Verriegelungselements über den Lagerbolzen die Drehbewegung erfolgt, so dass der Queranschlag in der Aufnahmetasche etwas wegkippt. Umgekehrt wird der Queranschlag auch bei der entsprechenden Rückstellbewegung wieder von dem Quersteg in die Ausgangsposition gepresst.

Der Queranschlag ist dabei zweckdienlicherweise in Vertikalrichtung oberhalb des Lagerbolzens angeordnet. Er bildet insofern einen Drehhebel zur Ausübung der Drehbewegung für das Verriegelungselement aus, wobei sich dieser Hebelarm in Vertikalrichtung erstreckt. Der den Hebelarm bildende Queranschlag und der Wippenarm sind daher insbesondere unter 90° zueinander angeordnet.

Zweckdienlicherweise überdeckt das Federblech auch den Queranschlag und die Entriegelungslasche, wobei das Federblech hierzu eine Mulde aufweist, in die sich der Queranschlag und die Entriegelungslasche hinein erstrecken. Die Mulde ist dabei in Längsrichtung ausreichend groß dimensioniert, dass die Bewegung der Entriegelungslasche und des Queranschlags bei der Betätigung ermöglicht ist.

Im Hinblick auf eine möglichst einfache konstruktive Ausgestaltung ist das Federblech zweckdienlicherweise als ein Stanzbiegeteil ausgebildet. Weiterhin ist das Verriegelungselement vorzugsweise als ein einstückiges Bauteil vorzugsweise ein Guss- oder Druckgussteil insbesondere aus Metall. Bevorzugt ist es ein einstückiges Zink-Druckgussteil. Der Wippenarm, der Lagerbolzen sowie der Queranschlag sind daher ein einziges zusammenhängendes Formteil.

Ein Ausführungsbeispiel wird nachfolgend anhand der Figuren näher erläutert. Diese zeigen jeweils in vereinfachten Darstellungen:
- FIG 1: ein Steckerelement in perspektivischer Darstellung gemäß dem Stand der Technik,
- FIG 2: eine perspektivische Explosionsdarstellung eines Verriegelungsmechanismus für das Steckerelement mit einer Ziehlasche, einem Verriegelungselement sowie einem Federblech,
- FIG 3: eine weitere perspektivische Explosionsdarstellung des Verriegelungsmechanismus gemäß FIG 2 sowie
- FIG 4: eine Seitenansicht des Verriegelungsmechanismus gemäß FIG 2 ebenfalls in einer Explosionsdarstellung.

In den Figuren sind gleichwirkende Teile mit den gleichen Bezugszeichen versehen.

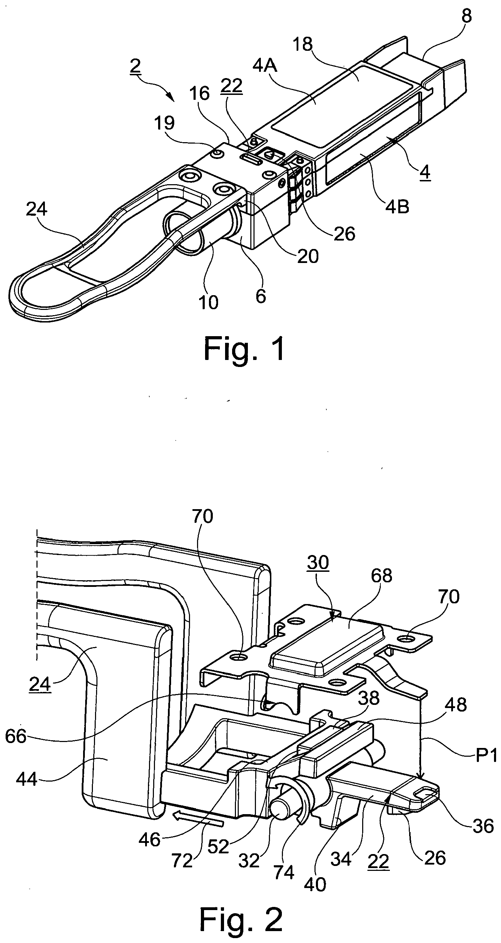

Das in FIG 1 dargestellte, aus der WO 2013/030093 bekannte Steckerelement 2 ist als ein SFP-Stecker ausgebildet. Es weist ein zweischaliges Steckergehäuse 4 mit einem Oberteil 4A sowie ein Unterteil 4B auf und erstreckt sich in Längsrichtung zwischen einer rückseitigen Stirnwand 6 zu einer vorderen Stirnseite 8. An der rückseitigen Stirnwand 6 ist eine Kabelöffnung 10 für ein einzuführendes Kabel ausgebildet. Die vordere Stirnseite 8 weist eine Öffnung für ein durch eine Leiterplatte gebildetes Steckkontaktelement auf. Im rückwärtigen Bereich weist das Steckergehäuse 4 eine Gehäusestufe 16 auf, wodurch die Steckerhöhe, jedoch nicht die Breite reduziert ist. Der sich an die Gehäusestufe 16 anschließende vordere Bereich bildet einen Steckerbereich 18, mit dem das Steckerelement 2 im gesteckten Zustand in einem korrespondierenden Gegenstück zur Kontaktierung eingesteckt ist. Die beiden Gehäuseteile 4A, 4B sind bevorzugt ausschließlich im rückwärtigen Bereich über Befestigungsniete 19 verbunden.

Die Längsrichtung ist allgemein als die Erstreckungsrichtung von der rückseitigen Stirnwand 6 zu der vorderseitigen Stirnseite 8 definiert, eine Querrichtung ist als die Erstreckungsrichtung senkrecht hierzu von einer linken zur rechten Seitenwand (Breite) und die Vertikalrichtung ist als die Erstreckungsrichtung senkrecht zur Längsrichtung und zur Querrichtung von der Gehäuseunterseite zur Gehäuseoberseite (Höhe) definiert.

An die rückseitige Stirnwand 6 schließt sich eine Ziehlasche 24 an, die lediglich in Längsrichtung betätigt werden kann, ohne dass eine Drehbewegung möglich ist. Die Ziehlasche dient zur manuellen Betätigung eines Verriegelungselements 22, das ein Riegelelement 26 aufweist, welches nach Art einer hervorstehenden Nase ausgebildet ist. Das Riegelelement 22 ist an der Oberseite des Steckergehäuses 4 im Steckerbereich 18 angeordnet. Im Bereich des Riegelelements 26 ist das Steckergehäuse 4 zudem von einem EMI-Käfig zu Abschirmzwecken umgeben.

Bei einem manuellen Ziehen an der Ziehlasche 24 wird die Längsbewegung der Ziehlasche 24 in eine Drehbewegung des Verriegelungselements 22 umgewandelt, so dass das Riegelelement 26 nach unten von einer Verriegelungsposition in eine entriegelte Position überführt wird, in der ein Herausziehen des Steckerlementes 2 aus einer entsprechenden Anschlussbuchse in einem Gerät ermöglicht ist. Das Verriegelungselement 22 und insbesondere das Riegelelement 26 wird durch eine Federkraft in die Verriegelungsposition gedrückt. Hierzu zeigt der Verriegelungsmechanismus den in den FIG 2 bis 4 dargestellten Aufbau.

Der Verriegelungsmechanismus 22 umfasst die Ziehlasche 24, das Verriegelungselement 22 sowie ein Federblech 30. Insbesondere ist der Verriegelungsmechanismus durch diese drei Bauteile im Zusammenwirken mit den beiden Gehäuseteilen 4A, 4B gebildet. Das Verriegelungselement 22 ist als ein einstückiges insbesondere Zink-Druckguss-Bauteil nach Art einer Wippe ausgebildet und umfasst einen Lagerbolzen 32, an den sich in Längsrichtung ein Wippenarm 34 anschließt, an dessen Oberseite das Riegelelement 26 angeformt ist. Gegenüberliegend zum Riegelelement weist der Wippenarm eine Ausmuldung 36 auf, die als eine etwa U-förmige Ausnehmung ausgebildet ist und zur Stirnseite des Wippenarms 34 offen ist.

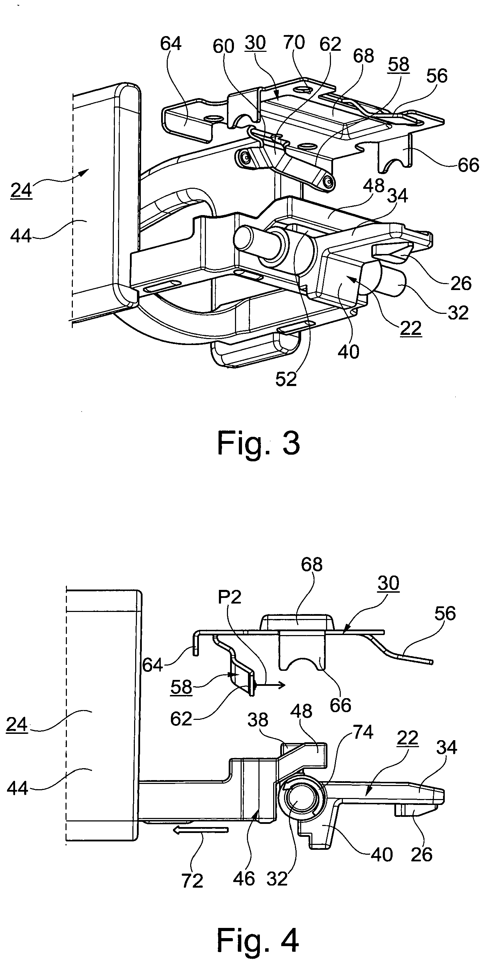

In Vertikalrichtung zum Lagerbolzen 32 orientiert ist ein Queranschlag 38 ausgebildet, welcher mit der Ziehlasche 24 zur Ausübung der Drehbewegung zusammenwirkt. An der gegenüberliegenden Oberseite ist nach Art einer L-förmigen Abkröpfung des Wippenarms 34 ein sich ebenfalls etwa in Vertikalrichtung erstreckender Mittensteg 40 ausgeformt. Wie insbesondere aus der Seitenansicht der FIG 4 zu entnehmen ist, ist der Mittensteg 40 und der Queranschlag 38 in Längsrichtung etwas zueinander versetzt angeordnet, wobei jeweils eine Flachseite dieser beiden Elemente zumindest im Wesentlichen innerhalb einer Vertikalebene liegen, die sich durch eine durch den Lagerbolzen 32 gebildete Drehachse erstreckt.

Der Lagerbolzen 32 weist zwei gegenüberliegende Bolzenteilstücke auf, über die die eigentliche drehbewegliche Lagerung erfolgt. In der Mitte weist der Lagerbolzen 32 im Ausführungsbeispiel eine Verdickung auf, an der die weiteren Elemente, nämlich Wippenarm 34, Queranschlag 38 sowie Mittensteg 40 angeformt sind.

Die Ziehlasche 24 weist im Ausführungsbeispiel zwei Vertikalarme 44 auf, die mit vorderen Flachseiten in der Ausgangsposition (Verriegelungsstellung) an der rückseitigen Stirnwand 6 anliegen. Die Ziehlasche 24 erstreckt sich mit einem vorderen, rahmenartigen Teilbereich in das Steckergehäuse 4 hinein. In diesem vorderen Teilbereich bildet die Ziehlasche einen sich in Querrichtung erstreckenden Querbügel 46 aus, an den sich eine Entriegelungslasche 48 anschließt. Die Entriegelungslasche 48 weist dabei zwei Seitenarme auf, die seitlich an dem Queranschlag 38 vorbei geführt und über einen Querarm miteinander verbunden sind. Zwischen dem Querarm und dem Querbügel 46 ist ein eine Aufnahmetasche 52 bildender Durchbruch ausgebildet, in der der Queranschlag 38 lose einliegt.

Zur Ausübung der Rückstellkraft ist bei dem Verriegelungsmechanismus das Federblech 30 angeordnet, welches im Grunde plattenförmig ausgebildet ist mit einem in etwa plattenförmigen Grundteil. Das Federblech 30 weist in Längsrichtung nach vorne an seiner einen Seite eine erste in Richtung zum Wippenarm 34 gebogene Federlasche 56 auf, die in Vertikalrichtung eine Federkraft auf den Wippenarm 34 ausübt, wie dies durch den Pfeil P1 dargestellt ist. Die erste Federlasche 56 ist dabei mittig am plattenförmigen Grundteil angeformt und liegt in der montierten Endstellung mit seiner Endseite in der Ausmuldung 36 ein, so dass es dort in Querrichtung formschlüssig gehalten ist.

In Längsrichtung am gegenüberliegenden Ende weist das Federblech 30 eine zweite Federlasche 58 auf, die zunächst durch eine Abkröpfung in Vertikalrichtung und zwar ebenfalls wiederum in Richtung auf das Verriegelungselement 22 zu ausgebildet ist. Wie insbesondere aus der FIG 3 in Kombination mit der FIG 4 zu entnehmen ist, ist die zweite Federlasche 58 durch einen abgewinkelten und gebogenen ausgeführten Vertikalschenkel 60 und einem hieran angeschlossenen Querschenkel 62 ausgebildet, welcher sich beidseitig zum Vertikalschenkel 60 in Querrichtung erstreckt. Der Querschenkel 62 liegt in der Montageendposition an einer dem Verriegelungselement 22 abgewandten Rückseite des Querbügels 46 an und übt auf diesen eine Rückstellkraft in Richtung des Pfeils P2 aus.

Das Federblech 30 weist an seinem dem Verriegelungselement 22 abgewandte Enden weiterhin durch eine Abkröpfung gebildeten, zweiteiligen Anschlag 64 aus, welcher die Bewegung der Ziehlasche in Längsrichtung begrenzt. Der Anschlag 64 überlappt daher den Querbügel 46 in Vertikalrichtung.

An den Seitenteilen sind gegenüberliegend weiterhin zwei Laschen in Richtung zu dem Lagerbolzen 32 abgebogen, die halbkreisförmige Ausnehmungen zeigen und dadurch Lagerhalbschalen 66 zur Lagerung des Lagerbolzens 32 ausbilden.

Schließlich zeigt das Federblech 30 in seinem Mittenbereich eine aus dem plattenförmigen Grundteil ausgeformte Mulde 68. Diese bildet einen Aufnahmeraum, in den sich der Queranschlag 38 des Verriegelungselements 22 zusammen mit dem Querarm 50 der Entriegelungslasche 48 hinein erstrecken und dort platzsparend aufgenommen werden.

Schließlich weist das Federblech 30 im Ausführungsbeispiel noch mehrere Befestigungslöcher 70 auf, mit denen es an einem der Gehäuseteile 4A, 4B, nämlich insbesondere dem Unterteil 4B, welches dem Verriegelungselement 22 gegenüberliegend angeordnet ist, befestigt. Die Befestigung erfolgt hierbei beispielsweise durch Nieten oder Schrauben. Alternativ hierzu sind auch lediglich Bolzen am Gehäuseteil 4B ausgeformt, welche in die Befestigungslöcher in der montierten Position eingesteckt sind und damit einen Formschluss in Längsrichtung bewirken. In Vertikalrichtung ist das Federblech 30 zwischen den beiden Gehäuseteilen 4A, 4B und der Zwischenlage des Verriegelungselements 22 eingeklemmt. Insgesamt ist dadurch das Federblech 30 am Gehäuse 4 zuverlässig ortsfest gehalten.

Die Funktion des Verriegelungsmechanismuses ist wie folgt:
Ausgehend von der Grund-Ausgangsposition, bei der sich der Verriegelungsmechanismus in der verriegelten Stellung befindet wird die Ziehlasche 24 manuell in Ziehrichtung 72 gezogen, die der Längsrichtung entspricht. Hierdurch wird über den Querarm der Entriegelungslasche 48 der Queranschlag 38 mitgenommen. Aufgrund der drehbeweglichen Lagerung des Verriegelungselements 22 wird hierdurch eine Drehung in Drehrichtung 74 des Verriegelungselements hervor gerufen, so dass das Riegelelement 26 in Vertikalrichtung in das Gehäuseinnere hinein gezogen wird und somit das Steckerelement 2 freigibt. Die erste Federlasche 56 wird bei dieser Bewegung des Wippenarms 34 entgegen der Richtung des Pfeils P1 ausgelenkt. Gleichzeitig wird die zweite Federlasche 58 ebenfalls entgegen der Richtung des Pfeils P2 ausgelenkt. Die beiden Federlaschen 56, 58 üben daher eine Federkraft auf den Wippenarm 34 in Vertikalrichtung und auf den Querbügel 46 in Längsrichtung aus und drücken somit unter wechselseitiger Unterstützung das Verriegelungselement 22 wieder in die Ausgangsposition, sobald die Ziehlasche 24 losgelassen wird. Bei dieser Rückstellbewegung drückt dabei der Querbügel 46 auf den Queranschlag 38, um das Verriegelungselement 22 wieder entgegen der Drehrichtung 74 zu betätigen.

Der besondere Vorteil des Federblechs 30 ist insbesondere in seiner multifunktionalen Ausgestaltung zu sehen, bei der durch nur ein einziges Bauteil mehrere Federfunktionen sowie eine integrierte Lagerfunktion verwirklicht ist. Dadurch ist ein einfacher, kostengünstiger Aufbau erzielt. Durch die Ausgestaltung eines ortsfest mit dem Gehäuse zu verbindenden Bauteil ist zudem auch eine einfache Montage ermöglicht. Insgesamt ist dadurch die Teilevielfalt reduziert.

**Bezugszeichenliste**

| | | | |
|---|---|---|---|
| 2 | Steckerelement | 72 | Ziehrichtung |
| 4 | Steckergehäuse | 74 | Drehrichtung |
| 4A | Oberteil | P1 | Pfeil |
| 4B | Unterteil | P2 | Pfeil |
| 6 | rückseitige Stirnwand | | |
| 8 | vordere Stirnseite | | |
| 10 | Kabel | | |
| 12 | Gehäusestufe | | |
| 18 | Steckerbereich | | |
| 19 | Befestigungsniet | | |
| 22 | Verriegelungselement | | |
| 24 | Ziehlasche | | |
| 26 | Riegelelement | | |
| 30 | Federblech | | |
| 32 | Lagerbolzen | | |
| 34 | Wippenarm | | |
| 36 | Ausmuldung | | |
| 38 | Queranschlag | | |
| 40 | Mittensteg | | |
| 44 | Vertikalarm | | |
| 46 | Querbügel | | |
| 48 | Entriegelungslasche | | |
| 52 | Aufnahmetasche | | |
| 56 | erste Federlasche | | |
| 58 | zweite Federlasche | | |
| 60 | Vertikalschenkel | | |
| 62 | Querschenkel | | |
| 64 | Anschlag | | |
| 66 | Lagerhalbschale | | |
| 68 | Mulde | | |
| 70 | Befestigungsloch | | |

## Patentansprüche

1. Steckerelement (2) nach Art eines Flachstecker für Datenleitungen in Netzwerken, insbesondere SFP-Stecker, mit einem Verriegelungsmechanismus zur Ausbildung einer verriegelbaren Steckverbindung mit einem Gegenstück, mit einem zweischaligen Steckergehäuse (4) mit zwei Gehäuseteilen, nämlich ein Oberteil (4A) sowie ein Unterteil (4B), die einen Innenraum des Steckerghäuses (4) begrenzen, wobei das Steckergehäuse (4) sich in Längsrichtung zwischen einer rückseitigen Stirnwand (6) zu einer vorderen Stirnseite (8) erstreckt und die rückseitige Stirnwand (6) eine Kabelöffnung (10) für ein einzuführendes Kabel ausbildet und die vordere Stirnseite (8) eine Öffnung für ein durch eine Leiterplatte gebildetes Steckkontaktelement aufweist, wobei der Verriegelungsmechanismus ein außerhalb des Steckergehäuses (4) angeordnetes Betätigungselement (24), insbesondere eine in Längsrichtung bewegbare Ziehlasche (24) umfasst, das mit einem zumindest teilweise innerhalb des Steckergehäuses (4) drehbar angeordneten Verriegelungselement (22) verbunden ist und das Verriegelungselement (22) ein Riegelelement (26) zum formschlüssigen Ent- und Verriegeln des Steckerelements (2) mit dem Gegenstück aufweist, wobei bei einem Betätigen des Betätigungselements (24) eine Drehbewegung des Verriegelungselements (22) hervorgerufen wird und das Riegelelement zwischen einer Verriegelungsposition und einer offenen Position wechselt,
**dadurch gekennzeichnet,**
**dass** im Innenraum des Steckergehäuses (4) ein Federblech (30) angeordnet ist, das sich an einem der Gehäuseteile (4A, 4B) zumindest mittelbar abstützt und eine Federkraft auf das Verriegelungselement (22) entgegen der von dem Betätigungselement (24) hervorgerufenen Kraft ausübt, um eine Rückstellkraft auf den Verriegelungsmechanismus auszuüben, um das Riegelelement nach einem Entriegeln wieder in die Verriegelungsposition zu bringen bzw. es zuverlässig in der verriegelten Position zu halten, wobei das Federblech (30) zwischen dem Verriegelungmechanismus und dem Steckergehäuse (4) zwischengelegt ist.

2. Steckerelement (2) nach Anspruch 1,
**dadurch gekennzeichnet,**
**dass** das Federblech (30) eine erste Federlasche (56) aufweist, die eine erste Rückstellkraft entgegen der Drehbewegung des Verriegelungselements (22) ausübt.

3. Steckerelement (2) nach Anspruch 2,
**dadurch gekennzeichnet,**
**dass** Verriegelungselement (22) nach Art einer Wippe mit einem Lagerbolzen (32) und einem Wippenarm (34) ausgebildet ist und am Wippenarm (34) das Riegelelement (26) angeordnet ist und die erste Federlasche (56) auf den Wippenarm (34) einwirkt.

4. Steckerelement (2) nach Anspruch 3,
**dadurch gekennzeichnet,**
**dass** der Wippenarm (34) eine Ausmuldung (36) als Gegenlagerfläche für die erste Federlasche (56) aufweist.

5. Steckerelement (2) nach einem der vorhergehenden Ansprüche,
**dadurch gekennzeichnet,**
**dass** das Federblech (30) eine zweite Federlasche (58) aufweist, die eine zweite Rückstellkraft entgegen der Betätigungsrichtung, insbesondere Ziehrichtung (72) des Betätigungselements (24) ausübt.

6. Steckerelement (2) nach Anspruch 5,
**dadurch gekennzeichnet,**
**dass** das Betätigungselement (24) einen quer zur Längsrichtung orientierten Querbügel (46) aufweist, welcher von der zweiten Federlasche (58) zur Ausübung der zweiten Rückstellkraft hintergriffen wird.

7. Steckerelement (2) nach Anspruch 5 oder 6,
**dadurch gekennzeichnet,**
**dass** die zweite Federlasche (58) am rückwärtigen, zum Betätigungselement (24) orientierten Ende als nach unten in Richtung zum Verriegelungselement (22) abgekröpfte Lasche ausgebildet ist.

8. Steckerelement (2) nach einem der Ansprüche 5 bis 7,
**dadurch gekennzeichnet,**
**dass** die zweite Federlasche (58) einen gebogenen, federnden Vertikalschenkel (60) aufweist, an den sich ein Querschenkel (62) anschließt, der auf das Betätigungselement (24) zur Ausübung der zweiten Rückstellkraft einwirkt.

9. Steckerelement (2) nach einem der vorhergehenden Ansprüche,
**dadurch gekennzeichnet,**
**dass** das Federblech (30) an seinem zum Betätigungselement (24) orientierten Ende einen Anschlag (64) für das Betätigungselement (24) aufweist.

10. Steckerelement (2) nach einem der vorhergehenden Ansprüche,
**dadurch gekennzeichnet,**
**dass** das Federblech (30) zumindest eine, vorzugsweise zwei Lagerhalbschalen (66) aufweist, in denen ein Lagerbolzen (32) des Verriegelungselementes (22) drehbar gelagert ist.

11. Steckerelement (2) nach einem der vorhergehenden Ansprüche,
**dadurch gekennzeichnet,**
**dass** das Verriegelungselement (22) einen Queranschlag (38) aufweist, der von einer Entriegelungslasche (48) zur Übertragung der Bewegung des Betätigungselements (24) auf das Verriegelungselement (22) hintergriffen wird, wobei der Queranschlag (38) insbesondere lose in einer Aufnahmetasche (52) einliegt.

12. Steckerelement (2) nach Anspruch 11,
**dadurch gekennzeichnet,**
**dass** das Federblech (30) eine Mulde (68) aufweist, in die sich der Queranschlag (38) und die Entriegelungslasche (48) hinein erstrecken.

13. Steckerelement (2) nach einem der vorhergehenden Ansprüche,
**dadurch gekennzeichnet,**
**dass** das Federblech (30) als ein Stanzbiegeteil ausgebildet ist.

14. Steckerelement (2) nach einem der vorhergehenden Ansprüche,
**dadurch gekennzeichnet,**
**dass** das Verriegelungselement (22) ein einstückiges Bauteil, insbesondere Gussteil ist.

## Claims

1. Connector element (2) in the manner of a flat-connector for data lines in networks, in particular SFP connector, with a locking mechanism for configuring a lockable tab connection with a counterpart, with a two-shell connector housing (4) having two housing parts, namely an upper part (4A) and a lower part (4B), which delimit an interior of the connector housing (4), wherein the connector housing (4) extends in the longitudinal direction between a rear end wall (6) to a front end (8) and the rear end wall (6) forms a cable opening (10) for a cable to be inserted and the front end (8) comprises an opening for a connector contact element formed by a printed circuit board, wherein the locking mechanism comprises an actuating element (24) arranged outside the connector housing (4), in particular a pull tab (24) movable in the longitudinal direction, which is connected to a locking element (22) arranged at least partially within the connector housing (4) in a rotatable manner, and the locking element (22) comprises a latch element (26) for positively unlocking and locking the connector element (2) to the counterpart, wherein a rotational movement of the locking element (22) is initiated when the actuating element (24) is actuated and the latch element changes between a locking position and an open position,
**characterized in**
**that** inside the connector housing (4) a spring steel sheet (30) is arranged, which is supported at least indirectly on one of the housing parts (4A, 4B) and exerts a spring force on the locking element (22) counter to the force initiated by the actuating element (24) to exert a restoring force on the locking mechanism in order to bring the locking element back into the locking position after unlocking, respectively to hold it reliably in the locked position, wherein the spring steel sheet (30) is interposed between the locking mechanism and the connector housing (4).

2. Connector element (2) according to claim 1,
**characterized in**
**that** the spring steel sheet (30) comprises a first spring tab (56), which exerts a first restoring force counter to the rotational movement of the locking element (22).

3. Connector element (2) according to claim 2,
**characterized in**
**that** the locking element (22) is designed in the manner of a rocker with a bearing bolt (32) and a rocker arm (34) and the latch element (26) is arranged on the rocker arm (34) and the first spring tab (56) acts on the rocker arm (34).

4. Connector element (2) according to claim 3,
**characterized in**
**that** the rocker arm (34) comprises a moulded recess (36) as a counterbearing surface for the first spring tab (56).

5. Connector element (2) according to one of the preceding claims,
**characterized in**
**that** the spring steel sheet (30) comprises a second spring tab (58), which exerts a second restoring force counter to the actuating direction, in particular pulling direction (72), of the actuating element (24).

6. Connector element (2) according to claim 5,
**characterized in**
**that** the actuating element (24) comprises a transverse bracket (46), which is oriented transversely to the longitudinal direction and which is engaged behind by the second spring tab (58) for exerting the second restoring force.

7. Connector element (2) according to claim 5 or 6,
**characterized in**
**that** at the rear end oriented towards the actuating element (24), the second spring tab (58) is designed as a tab, which is bent downwards in the direction of the locking element (22).

8. Connector element (2) according to one of the claims 5 to 7,
**characterized in**
**that** the second spring tab (58) comprises a bent and resilient vertical leg (60), which is adjoined by a transverse leg (62), which acts on the actuating element (24) to exert the second restoring force.

9. Connector element (2) according to one of the preceding claims,
**characterized in**
**that** at its end oriented towards the actuating element (24), the spring steel sheet (30) comprises a stop (64) for the actuating element (24).

10. Connector element (2) according to one of the preceding claims,
**characterized in**
**that** the spring steel sheet (30) comprises at least one, preferably two bearing half-shells (66), in which a bearing bolt (32) of the locking element (22) is rotatably mounted.

11. Connector element (2) according to one of the preceding claims,
**characterized in**
**that** the locking element (22) comprises a transverse stop (38), which is engaged behind by an unlocking tab (48) for transmitting the movement of the actuating element (24) to the locking element (22), wherein the transverse stop (38) lies in particular in a loose manner in a receiving pocket (52).

12. Connector element (2) according to claim 11,
**characterized in**
**that** the spring steel sheet (30) comprises a trough (68), into which the transverse stop (38) and the unlocking tab (48) extend.

13. Connector element (2) according to one of the preceding claims,
**characterized in**
**that** the spring steel sheet (30) is designed as a punched and bent part.

14. Connector element (2) according to one of the preceding claims,
**characterized in**
**that** the locking element (22) is a one-piece component, in particular a cast component.

## Revendications

1. Elément de connecteur (2) à la manière d'un connecteur plat pour lignes de données dans des réseaux, en particulier connecteur SFP, avec un mécanisme de verrouillage pour former une ensemble de connecteur verrouillable avec une contrepartie, avec un boîtier de connecteur (4) à deux coquilles ayant deux parties de boîtier, notamment une partie supérieure (4A) et une partie inférieure (4B), qui délimitent un espace intérieur du boîtier de connecteur (4), dans lequel le boîtier de connecteur (4) s'étend dans la direction longitudinale entre une paroi d'extrémité arrière (6) et une extrémité avant (8) et la paroi d'extrémité arrière (6) forme une ouverture de câble (10) pour un câble à insérer et l'extrémité avant (8) comprend une ouverture pour un élément de contact enfichable formé par une carte de circuit imprimé, dans lequel le mécanisme de verrouillage comprend un élément d'actionnement (24) disposé à l'extérieur du boîtier de connecteur (4), en particulier une tirette (24), qui est mobile dans la direction longitudinale, ledit élément d'actionnement (24) étant reliée à un élément de verrouillage (22) disposé au moins partiellement à l'intérieur du boîtier de connecteur (4) de manière rotative, et l'élément de verrouillage (22) comprend un élément de verrou (26) pour le déverrouillage et le verrouillage par complémentarité de forme de l'élément de connecteur (2) avec la contrepartie, dans lequel, lorsque l'élément d'actionnement (24) est actionné, un mouvement de rotation de l'élément de verrouillage (22) est provoqué et l'élément de verrouillage passe d'une position de verrouillage à une position d'ouverture,
**caractérisé en ce**
**qu'**une plaque à ressort (30) est disposée à l'intérieur du boîtier de connecteur (4), ladite plaque à ressort (30) s'appuyant au moins indirectement sur l'une des parties du boîtier (4A, 4B) et exerçant une force à ressort sur l'élément de verrouillage (22) à l'encontre de la force provoquée par l'élément d'actionnement (24) afin d'exercer une force de rappel sur le mécanisme de verrouillage pour ramener l'élément de verrouillage dans la position de verrouillage après le déverrouillage, dans lequel la plaque à ressort (30) est interposée entre le mécanisme de verrouillage et le boîtier de connecteur (4).

2. Élément de connexion (2) selon la revendication 1,
**caractérisé en ce**
**que** la plaque à ressort (30) comprend une première languette à ressort (56), qui exerce une première force de rappel à l'encontre du mouvement de rotation de l'élément de verrouillage (22).

3. Élément de connexion (2) selon la revendication 2,
**caractérisé en ce**
**que** l'élément de verrouillage (22) est conçu à la manière d'une bascule avec un boulon de palier (32) et un culbuteur (34) et l'élément de verrou (26) est disposé sur le culbuteur (34) et que la première languette à ressort (56) agit sur le culbuteur (34).

4. Élément de connecteur (2) selon la revendication 3,
**caractérisé en ce**
**que** le culbuteur (34) comprend un évidement (36) comme surface de contre-palier pour la première languette à ressort (56).

5. Élément de connecteur (2) selon l'une des revendications précédentes,
**caractérisé en ce**
**que** la plaque à ressort (30) comprend une deuxième languette à ressort (58), qui exerce une deuxième force de rappel à l'encontre de la direction d'actionnement, en particulier de la direction de traction (72) de l'élément d'actionnement (24).

6. Élément de connecteur (2) selon la revendication 5,
**caractérisé en ce**
**que** l'élément d'actionnement (24) comprend un étrier transversal (46), qui est orienté transversalement à la direction longitudinale et derrière lequel s'engage la deuxième languette à ressort (58) pour exercer la deuxième force de rappel.

7. Élément de connecteur (2) selon la revendication 5 ou 6,
**caractérisé en ce**
**qu'** à l'extrémité arrière orientée vers l'élément d'actionnement (24), la deuxième languette à ressort (58) est conçue comme une languette, qui est coudée vers le bas en direction de l'élément de verrouillage (22).

8. Élément de connecteur (2) selon l'une des revendications 5 à 7,
**caractérisé en ce**
**que** la deuxième languette à ressort (58) comprend une branche verticale (60) pliée et élastique à laquelle se raccorde une branche transversale (62), qui agit sur l'élément d'actionnement (24) pour exercer la deuxième force de rappel.

9. Élément de connecteur (2) selon l'une des revendications précédentes,
**caractérisé en ce**
**qu'**à son extrémité orientée vers l'élément d'actionnement (24), la plaque à ressort (30) comprend une butée (64) pour l'élément d'actionnement (24).

10. Élément de connecteur (2) selon l'une des revendications précédentes,
**caractérisé en ce**
**que** la plaque à ressort (30) comprend au moins une, de préférence deux demi-coquilles de palier (66), dans lesquelles un boulon de palier (32) de l'élément de verrouillage (22) est monté à rotation.

11. Élément de connecteur (2) selon l'une des revendications précédentes,
**caractérisé en ce**
**que** l'élément de verrouillage (22) comprend une butée transversale (38), derrière laquelle s'engage une languette de déverrouillage (48) pour transmettre le mouvement de l'élément d'actionnement (24) à l'élément de verrouillage (22), la butée transversale (38) se trouvant en particulier de manière lâche dans une poche de réception (52).

12. Élément de connecteur (2) selon la revendication 11,
**caractérisé en ce**
**que** la plaque à ressort (30) comprend une cuvette (68), dans laquelle s'étendent la butée transversale (38) et la languette de déverrouillage (48).

13. Élément de connecteur (2) selon l'une des revendications précédentes,
**caractérisé en ce**
**que** la plaque à ressort (30) est conçue comme une pièce découpée et pliée.

14. Élément de connecteur (2) selon l'une des revendications précédentes,
**caractérisé en ce**
**que** l'élément de verrouillage (22) est un élément d'une seule pièce, notamment une pièce moulée.
